## Europäisches Patentamt
## European Patent Office
## Office européen des brevets

(19)

(11) Veröffentlichungsnummer : **0 208 191**
**B1**

(12)

# EUROPÄISCHE PATENTSCHRIFT

(45) Veröffentlichungstag der Patentschrift :
23.11.89

(51) Int. Cl.⁴ : **B 23 B 33/00**, B 23 Q   1/24

(21) Anmeldenummer : **86108606.4**

(22) Anmeldetag : **24.06.86**

(54) Spanneinrichtung für Kurbelwellen.

(30) Priorität : **12.07.85 DE 3524986**

(43) Veröffentlichungstag der Anmeldung :
**14.01.87 Patentblatt 87/03**

(45) Bekanntmachung des Hinweises auf die Patenterteilung : **23.11.89 Patentblatt 89/47**

(84) Benannte Vertragsstaaten :
**AT DE FR GB IT**

(56) Entgegenhaltungen :
DE--A-- 3 027 477
DE--C--   340 429
FR--A-- 2 407 048
GB--A-- 2 058 949
GB--A-- 2 070 489
US--A-- 1 704 702
US--A-- 2 250 632
US--A-- 2 451 705
US--A-- 3 246 549
US--A-- 4 122 877

(73) Patentinhaber : **Boehringer Werkzeugmaschinen GmbH**
**Stuttgarter Strasse 50 Postfach 220**
**D-7320 Göppingen (DE)**

(72) Erfinder : **Berbalk, Hermann, Dipl.-Ing.**
**Liebensteinstrasse 7**
**D-7320 Göppingen (DE)**

(74) Vertreter : **Vogeser, Werner, Dipl.-Ing. et al**
**Patentanwälte Hansmann & Vogeser Albert-Rosshaupter-Strasse 65**
**D-8000 München 70 (DE)**

EP 0 208 191 B1

## Beschreibung

Die Erfindung betrifft eine Spanneinrichtung für Kurbelwellen entsprechend dem Oberbegriff des Anspruchs 1.

Beim Spannen von Kurbelwellen und ähnlichen unregelmäßigen Werkstücken auf den entsprechenden Bearbeitungsmaschinen besteht das Problem vor allem darin, eine Kurbelwelle, besonders wenn sie nach dem Schmieden oder Gießen noch nicht spanend bearbeitet wurde, definiert und reproduzierbar so fest einzuspannen, daß trotz des relativ geringen Querschnittes einer Kurbelwelle im Vergleich zur Gesamtlänge durch die bei der Bearbeitung auftretenden Zerspanungskräfte und -temperaturen kein Verbiegen bzw. Verwinden der Kurbelwelle auftritt.

Das gegenwärtig am häufigsten angewandte Herstellungsverfahren sieht so aus, daß der Kurbelwellenrohling vor der eigentlichen spanenden Bearbeitung, die auf einer Kurbelwellenbearbeitungsmaschine erfolgt, auf einer Sondermaschine an einer oder mehreren bezüglich der Kurbelwellendrehachse genau definierten Wangenflächen bearbeitet wird, wobei die Kurbelwelle zwischen Spitzen gespannt ist. Bei der anschließenden Bearbeitung auf der Kurbelwellenbearbeitungsmaschine wird dann die Kurbelwelle, wie beispielsweise aus der US-PS 3 246 549 bekannt, an den vorher bearbeiteten Wangenflächen mit Hilfe von Hebeln und Spannscheiben gespannt, so daß jede Ungenauigkeit dieser Flächen bezüglich der Drehachse der Kurbelwelle beim Spannen in der Kurbelwellenbearbeitungsmaschine zu einem Verdrücken der Kurbelwelle führt. Zusammen mit der Verformung der Kurbelwelle bedingt durch die Zerspanungskräfte äußert sich dies in einer exzentrischen Lage der bearbeiteten Lagerstellen in Bezug auf die Kurbelwellenachse des Kurbelwelle nach dem Ausspannen. Der Nachteil bei dieser Vorgehensweise besteht vor allem darin, daß die Bearbeitung einer Kurbelwelle auf diese Art und Weise sehr aufwendig und zeitintensiv verläuft, da zum einen für die Herstellung der vorbearbeiteten Spannflächen eine Sondermaschine benötigt wird. Des weiteren wirkt sich nachteilig aus, daß bei einem weiteren notwendigen Spannvorgang für eine weitere Bearbeitungsfolge, z. B. eine Schlicht- oder Freistichoperation, die Kurbelwelle verspannt wird, da infolge der vorhergehenden Schruppzerspannung die Kurbelwelle sich verformt bzw. verzieht und damit die vorbearbeiteten Spannflächen nicht mehr die ursprünglich definierte Lage zur Drehachse der Kurbelwelle haben. Diese Fehler wirkt sich dann dementsprechend negativ auf die nachfolgende Bearbeitungsgenauigkeit aus. Dies bedingt größere Bearbeitungszugaben und damit Mehrkosten für die nachfolgende Bearbeitungsoperation, z. B. der Schleifoperation. Darüberhinaus ist bei einer solchen Spannvorrichtung die für höhere Bearbeitungsdrehzahlen unbedingt erforderliche Spannkontrolle nicht vorhanden.

Der Erfindung liegt daher die Aufgabe zugrunde, eine Spanneinrichtung zu schaffen, mit der Kurbelwellen, die an Lagerflächen und Wangen noch nicht spanend bearbeitet wurden, in definierter Lage reproduzierbar und ohne Verbiegung der Kurbelwelle, auch bei etwas differierenden Kurbelwellenrohlingen und variierenden Spannkräften, in Kurbelwellenbearbeitungsmaschinen gespannt werden können.

Diese Aufgabe wird bei einer gattungsgemäßen Einrichtung durch die kennzeichnenden Merkmale des Anspruchs 1 gelöst. Zweckmäßige Ausbildungen der Erfindung ergeben sich aus den Unteransprüchen.

Die Spannung der Kurbelwelle erfolgt dabei durch drei unabhängig voneinander arbeitende Spanneinrichtungen: Mit einer ersten Spanneinrichtung wird die Kurbelwelle entlang ihrer Drehachse drehbar zwischen Spitzen gespannt. In einem um die Kurbelwelle angeordneten, außen verzahnten und angetriebenen Ring sind zweite und dritte Spanneinrichtungen, je hydraulisch betätigt, angeordnet. Die Druckmittelzuführung für die hydraulische Betätigung der zweiten und dritten Spanneinrichtung befindet sich außerhalb des mit der Kurbelwelle drehenden Ringes und erfolgt während des Stillstandes über die stirnseitig angeordneten automatischen Ventile A, B und C, über einen an dieser Stirnseite von außer her zuführbaren, nicht gezeigten, Kupplungsblock. Während der Drehung des Ringes besteht jedoch keine Verbindung zwischen den hydraulisch betätigten Spanneinrichtungen innerhalb des Ringes und der Druckerzeugung außerhalb des Ringes, so daß der für die Aufrechterhaltung der Spannung benötigte Druck durch Einrichtungen innerhalb des Ringes aufrechterhalten werden muß. Dies geschieht durch sog. Hydrospeicher, d. h. federdruckbeaufschlagte Druckmittelspeicher, die in offener Verbindung mit den innerhalb des Ringes befindlichen Teilen der Hydraulikkreisläufe stehen, bei jedem Spannvorgang, der natürlich nur bei Stillstand des Ringes erfolgen kann, wieder neu unter den Spanndruck gesetzt werden, so daß die dadurch vorgespannte Feder des Hydrospeichers nach Trennung von der Druckerzeugung eine Aufrechterhaltung des Druckniveaus innerhalb des Ringes sichert. Zur Kontrolle des Spannungszustandes der Feder der Hydrospeicher und damit des Druckniveaus in der zweiten und dritten Spanneinrichtung sind durch Federn spielfrei gehaltene Stifte zwischen der Feder des Hydrospeichers und der Außenfläche des Ringes angeordnet, so daß mit Hilfe von Sonden aufgrund der Lageveränderung des Stiftes der Druckzustand der hydraulisch betätigten zweiten und dritten Spanneinrichtung an der Außenfläche des Ringes abgetastet werden kann, wodurch eine automatische Notabschaltung der Maschine bei zu niedrigem Spanndruck realisierbar ist. Zusätzlich zur Kontrolle des Spanndruckes wird mit Hilfe eines Abtaststiftes und Weitergabe dessen Lageveränderung an die Außenfläche des Ringes, wo sie wiederum durch Sonden abgetastet werden kann, eine Kontrolle der Position der hydraulisch betätigten Spannschieber der zweiten und dritten Spanneinrichtung vorgesehen. Diese Information, also ob bei druckloser Spannhydraulik die Spannschieber lose am Werkstück anliegen oder vollständig von diesem zurückgezogen sind, ist besonders bei automatischem Werkstückwechsel jederzeit abrufbar und stellt darüberhinaus zusammen mit der Druckkontrolle der Spannhydraulik eine Doppelkontrolle bezüglich der Sicherheit des Spannsystems dar.

Durch das spezifische Zusammenwirken der drei Spanneinrichtungen hinsichtlich Reihenfolge, Spannkraft und Spannrichtung, nämlich :

— Spannen der Kurbelwelle längs ihrer Drehachse zwischen den Spitzen, drehbar mittels einer ersten Spanneinrichtung

— Anpressen beispielsweise eines Kurbelzapfens mit Hilfe eines hydraulisch betätigten Spannschiebers gegen einen in dem die zweite und dritte Spanneinrichtung tragenden Ring fest angeordneten Anschlag mit großer Kraft durch eine zweite Spanneinrichtung

— zusätzliches Anlegen verschiedener, zum Teil gegeneinander gerichteter Spannschieber an unterschiedlichen Punkten der Kurbelwellenwangen mittels einer dritten hydraulischen Spanneinrichtung

ergeben sich viele Vorteile :

— Es können bis auf den Bereich der Spitzenspannung unbearbeitete Kurbelwellenrohlinge gespannt werden.

— Die zweite und dritte Spanneinrichtung können, bei Beibehaltung der Spannung zwischen Spitzen durch die erste Spanneinrichtung, zwischen einzelnen Bearbeitungsschritten gelöst und wieder gespannt werden, ohne daß die Gefahr besteht, daß die Kurbelwelle durch mögliche Verformung durch einen vorhergehenden Bearbeitungsvorgang ausgelöst, verspannt.

— Ein Verbiegen bzw. Verwinden der Kurbelwelle durch die Spanneinrichtungen aufgrund leicht variierender Werkstückkontur bzw. Spannkräfte ist durch die Art des Zusammenwirkens der drei Spanneinrichtungen ausgeschlossen.

— Trotz der fertigungstechnisch vorteilhaften Trennung der Spannhydraulik von der Druckerzeugung bei rotierenden Spanneinrichtungen bleibt die beim Spannen aufgebrachte Anpreßkraft.

— Die Kontrolleinrichtungen für Spanndruck und Spannschieberstellung ermöglichen einen weitgehend automatisierten Einsatz der Kurbelwellenbearbeitungsmaschine und stellen ein zusätzliches Sicherheitsmerkmal dar. Das Spannsystem ist durch Auswechseln der Spannschieber und Variation der Spanndrücke leicht auf unterschiedliche Werstücke umzurüsten.

Eine Ausführungsform der Erfindung wird im folgenden anhand der Fig. 1 bis 4 beispielhaft näher beschrieben : Es zeigt :

Fig. 1 eine Schnittansicht der 2. und 3. Spanneinrichtung in Kurbelwellenlängsrichtung,

Fig. 2 in der gleichen Blickrichtung die in eine Kurbelwellenbearbeitungsmaschine eingebaute Spanneinrichtung,

Fig. 3 eine Seitenansicht der Kurbelwellenbearbeitungsmaschine der Fig. 2,

Fig. 4 eine Aufsicht auf die Kurbelwellenbearbeitungsmaschine der Fig. 2.

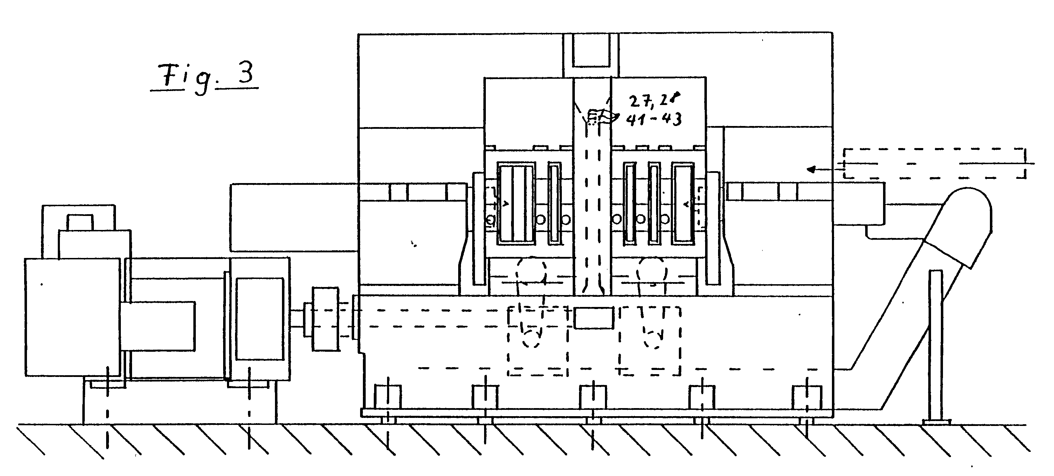

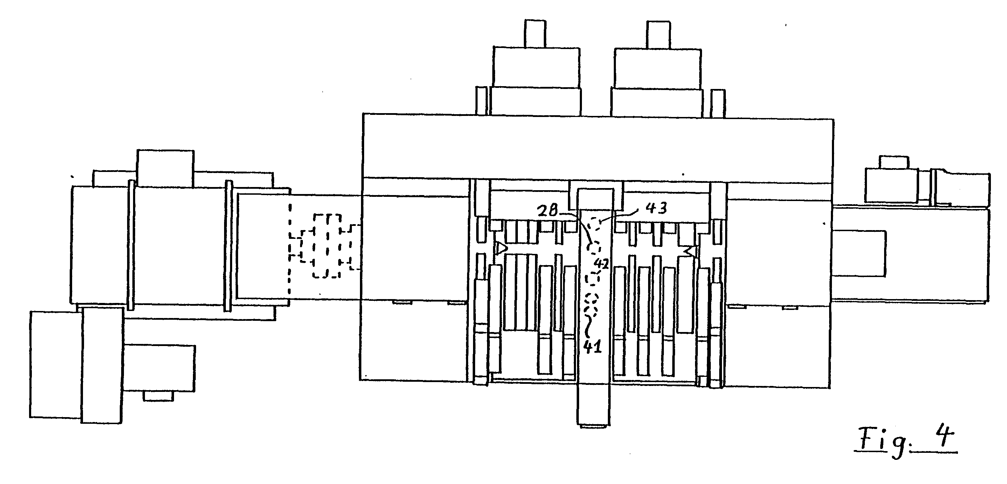

Die in die Kurbelwellenbearbeitungsmaschine eingelegte Kurbelwelle 1 wird entlang ihrer Drehachse 2 so von einer ersten, in den Fig. 3 und 4 gezeigten Spanneinrichtung zwischen Spitzen gehalten, daß die Kurbelwelle 1 um ihre Drehachse 2 pendeln kann.

Durch eine zweite Spanneinrichtung wird dann der unten liegende Hubzapfen 3 von einem Spannschieber 5, der bei Verschieben des hydraulisch betätigten Zylinders 10 durch dessen Schräge 11 bewegt wird, gegen einen Anschlag 6 gedrückt. Durch die Drehbarkeit der Kurbelwelle in der ersten Spanneinrichtung um ihre Drehachse 2 wird beim Spannen der zweiten Spanneinrichtung trotz einer sehr großen Spannkraft durch den Spannschieber 5 keine Verbiegung auf die Kurbelwelle ausgeübt.

Nachdem auf diese Weise die Lage der Kurbelwelle bezüglich des drehenden Ringes, in dem die zweite und dritte Spanneinrichtung untergebracht sind, festgelegt ist, werden nun zur weiteren Abstützung der Kurbelwelle von einer dritten Spanneinrichtung die über das Druckmittel miteinander in Verbindung stehenden Spannschieber 7, 8, 9 durch Druckbeaufschlagung der Zylinder 13, 17, 18 gegen die Kurbelwelle gepreßt. Obwohl die Spannschieber 7, 8, 9 zum Teil gegeneinander gerichtet sind, heben sich aufgrund der Ungenauigkeit in der Kurbelwellenrohkontur und den unterschiedlichen Reibverhältnissen in der Hydraulik und bei den Spannschiebern nicht alle Kraftkomponenten gegeneinander auf. Die von der dritten Spanneinrichtung aufgebrachten Spannkräfte sind jedoch nicht so groß, daß die verbleibenden freien Kraftkomponenten trotz der gespannten zweiten Spanneinrichtung eine Lageveränderung bzw. Verwindung der Kurbelwelle bewirken könnten.

Da die Druckerzeugung für die zweite und dritte Spanneinrichtung außerhalb des sich drehenden Gehäuseringes 51 untergebracht ist, stehen die Hydraulikleitungen innerhalb des Gehäuseringes 51 nur bei dessen Stillstand über die Ventile A, B, C mit dem Druckerzeuger in Verbindung. Sobald von den Ventilen A, B, C die entsprechenden Anschlußstücke von außerhalb des Gehäuseringes 51 entfernt werden, hat die Spannhydraulik keine Verbindung mehr nach außen, und der Gehäusering 51 kann sich drehen. Um ein Lockern der Spannschieber 4, 7, 8, 9 während der Bearbeitung zu verhindern, weisen die zweite und dritte Spanneinrichtung jeweils einen Hydrospeicher 19, 20 auf, der aus einem mit den Hydraulikleitungen frei in Verbindung stehenden Druckmittelspeicher besteht, der unter der Kraft einer Feder 22, 21 steht, die durch die Druckbeaufschlagung beim Spannen der jeweiligen Spanneinrichtung vorgespannt wird. Auf diese Weise wird das Druckniveau in den hydraulisch betätigten Spanneinrichtungen auch während der Bearbeitung, also bei abgekoppelter Druckerzeugung, aufrechterhalten.

Die Druckmittelspeicher 19, 20 werden bei jedem Spannvorgang wieder neu unter Druck gesetzt. Zum Lösen der zweiten und dritten Spanneinrichtungen wird über das Ventil C der jeweils hinter den Kolben 17, 18, 10, 13 liegende Raum im Zylinder unter Druck gesetzt, so daß die Kolben 17, 18, 10, 13 zurückbewegt werden und das Druckmittel über die Ventile A und B den Gehäusering 51 verläßt.

Zur Kontrolle des Hydraulikdruckes der zweiten und dritten Spanneinrichtung wird der Spannungszustand der Federn 21, 22 festgestellt und über eine Lageveränderung der mit den Kolbenböden der Hydrospeicher 29 verbundenen Bolzen 23, 25 unter Vermittlung der durch Federn spielfrei gehaltenen Stößel 24, 26 an die Außenfläche des ringförmigen Gehäuses 50 übertragen, wo sie von Sensoren 27, 28 auch während der Drehung des ringförmigen Gehäuses 51 berührungslos abgetastet werden können.

Zusätzlich zum Spanndruck wird noch die Lage der Spannschieber 3, 5, 8, 9 der zweiten und dritten Spanneinrichtung kontrolliert. Durch Federn spielfrei gehaltene Abtaststifte 31, 30, enden, je nach dem, ob die Spannschieber 8, 9 an der Kurbelwelle anliegen oder von ihr zurückgezogen sind, in den Nuten 34, 32 oder auf der höher gelegenen Außenfläche der Spannschieber 8, 9. Diese Lageveränderung wird durch Hebel 35, 37 und spielfrei gehaltene Stößel 38, 40 ebenfalls wieder an die Außenfläche des ringförmigen Gehäuses 51 weitergeleitet, wo sie durch Sonden 41, 42, 43 abgetastet werden.

Diese Doppelkontrolle stellt nicht nur ein zusätzliches Sicherheitsmerkmal dar, sondern ist besonders bei automatisierter Werkstückbeschickung der Kurbelwellenbearbeitungsmaschine notwendig, um sicherstellen zu können, daß eine Werkstückbeschickung nur bei gelösten Spanneinrichtungen und zurückgezogenen Spannschiebern erfolgt.

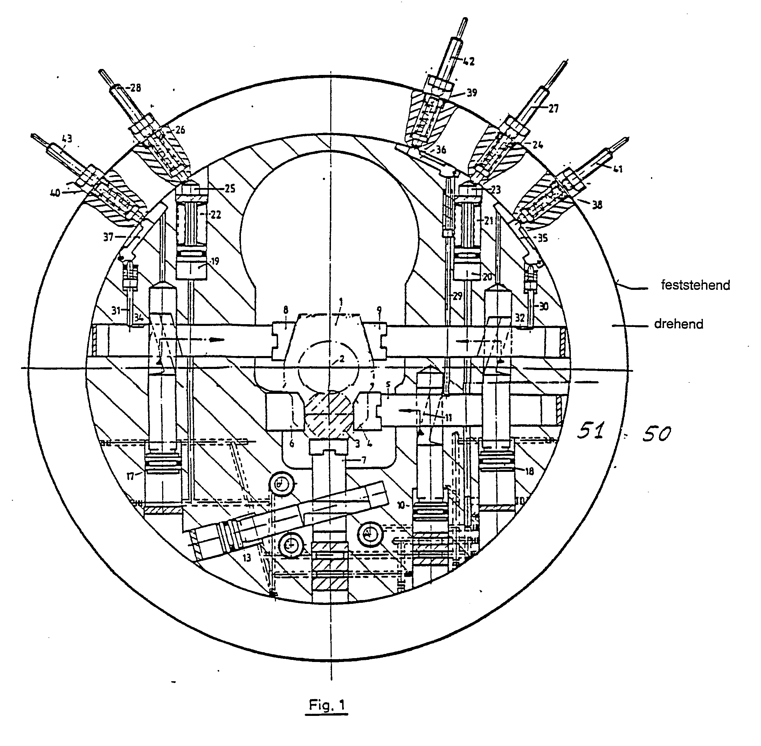

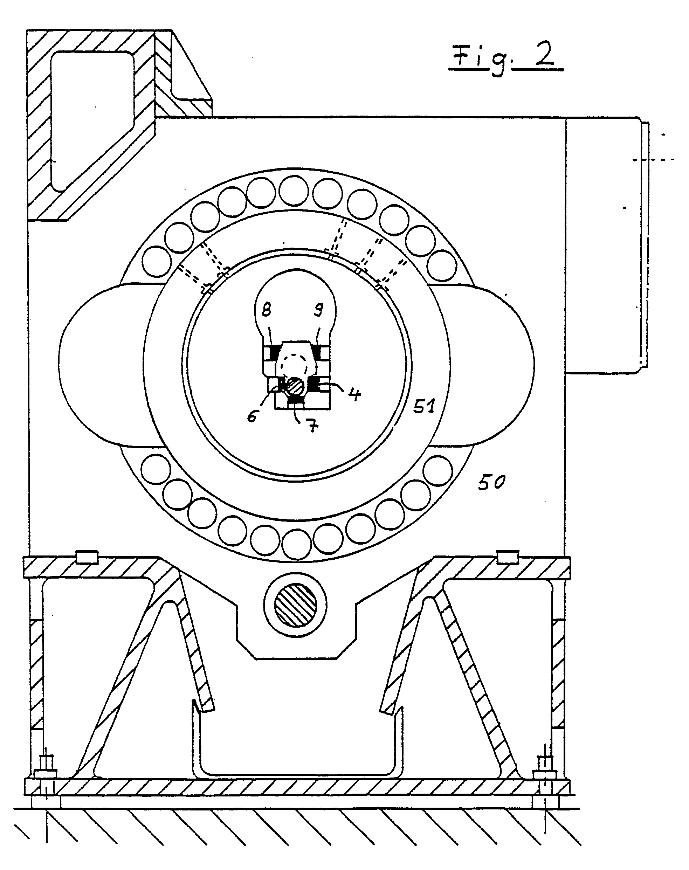

In Fig. 2 ist der sich drehende Ring 51 mit der zweiten und dritten Spanneinrichtung in der gleichen Blickrichtung wie in Fig. 1 als Teilschnittdarstellung in einer Kurbelwellenbearbeitungsmaschine im Einsatz dargestellt. Fig. 3 und 4 zeigen die gleiche Bearbeitungsmaschine in Seitenansicht und Aufsicht, jedoch ist in Fig. 3 der Kurbelwellen-Rohling schematisch vor dem Einführen in die Maschine dargestellt, während in Fig. 4 kein Werkstück gezeigt ist.

In beiden Figuren ist die erste Spanneinrichtung, mittels der die Kurbelwelle in Längsrichtung zwischen Spitzen gespannt wird, zu erkennen, sowie die punktiert dargestellten Sonden 27, 28 und 41 bis 43.

## Patentansprüche

1. Spannfutter zum Einspannen von Kurbelwellen (1) oder dergleichen Werkstücken auf Kurbelwellenbearbeitungsmaschinen, bei denen die Werkstücke frei drehbar zwischen, eine erste Spanneinrichtung bildenden, Spitzen aufgenommen sind und zusätzlich durch eine zweite, hydraulisch betätigte Spanneinrichtung gespannt werden, dadurch gekennzeichnet, daß

— die zweite Spanneinrichtung mittels eines oder mehrerer, hydraulisch betätigter Stempel (5) einen oder mehrere Hublagerzapfen (3) der Kurbelwelle (1) mit großer Kraft gegen einen Anschlag (6) preßt, so daß die Drehlage der Kurbelwelle (1) festgelegt ist, und

— eine dritte Spanneinrichtung, die einen oder mehrere Stempel (7, 8, 9), die zum Teil gegeneinander gerichtet sind, gegen eine oder mehrere Wangen der Kurbelwelle (1) preßt,

— wobei die im Betrieb der Werkzeugmaschine sich mitdrehenden zweiten und dritten, hydraulisch betätigten Spanneinrichtungen während der Drehung ohne Verbindung zur Hydraulikpumpe sind, welche sich nicht mit dem Werkstück mitdreht, und der für die Aufrechterhaltung der Spannung benötigte Druck von federbeaufschlagten, in dem sich drehenden Spannfutter untergebrachten Druckmittelspeichern (19, 20) geliefert wird.

2. Spanneinrichtung nach Anspruch 1, dadurch gekennzeichnet, daß bei jedem neuen Spannen der zweiten und dritten Spanneinrichtung die Druckmittelspeicher (19, 20) automatisch neu unter Druck gesetzt werden.

3. Spanneinrichtung nach Anspruch 1, dadurch gekennzeichnet, daß bei Stillstand und auch bei Drehung der mechanisch ermittelte Spannzustand der zweiten und dritten Spanneinrichtung über Sensoren (41, 42, 43, 27, 28) von außerhalb der Spanneinrichtung abgefragt werden kann.

4. Spanneinrichtung nach Anspruch 1, dadurch gekennzeichnet, daß die Anpreßkräfte der zweiten Spanneinrichtung gegenüber denen der dritten Spanneinrichtung hinsichtlich Größe und Richtung so gewählt sind, daß eine Lageveränderung bzw. Verwindung der durch das Spannen der zweiten Spanneinrichtung festgelegten Position der Kurbelwelle durch Spannen der dritten Spanneinrichtung nicht möglich ist.

5. Spanneinrichtung nach Anspruch 1, dadurch gekennzeichnet, daß durch Aufrechterhalten der Spannung der ersten Spanneinrichtung und Beibehalten der Position des Anschlages (6) der zweiten Spanneinrichtung ein mehrmaliges Lösen und Spannen der zweiten und dritten Spanneinrichtung zwischen einzelnen Bearbeitungsgängen möglich wird, um ein selbsttätiges Ausrichten der bei der Bearbeitung durch die auftretenden Bearbeitungskräfte und -temperaturen verzogenen Kurbelwelle (1) zu ermöglichen.

## Claims

1. Chucking device for crankshaft (1) or similar workpieces on crankshaft processing machines with which the workpieces are accommodated in a freely rotatable manner between points forming a first chuck and are additionally clamped by a hydraulically operated second chuck, characterized by the fact that

— the second chuck, by means of one or more hydraulically operated rams (5), presses one or more lifting bearing pins (30) of the crankshaft (1) with considerable force, so that the position to which the crankshaft (1) has been rotated is established, and

— a third chuck, by which one or more rams (7, 8, 9) partly directed against one another are pressed against one or more cheecks of the crankshaft (1),

— the second and third hydraulically operated chucks accompanying the rotation of the machine tool are not in communication with the hydraulic pump during the rotation, this pump not rotating with the workpiece, and the pressure required for the maintenance of the clamping action is supplied by spring-biased pressure medium stores (19, 20) accommodated in the rotating chuck.

2. Chucking device in accordance with Claim 1, characterized by the fact that on each new clamping operation of the second and third chucks the pressure medium stores (19, 20) are automatically once more subjected to pressure.

3. Chucking device in accordance with Claim 1, characterized by the fact that when it is stationary and also when it is in rotation the mechanically ascertained clamping state of the second and third chucks can be interrogated via sensors (41, 42, 43, 27, 28) from outside the chucking device.

4. Chucking device in accordance with Claim 1, characterized by the fact that the size and direction selected for the contact pressure forces of the second chuck in relation to those of the third chuck are such that the crankshaft of which the position has been fixed by the clamping action of the second chuck will not undergo any change in position or suffer any distortion as a result of the clamping action of the third chuck.

5. Chucking device in accordance with Claim 1, characterized by the fact that by maintaining the clamping action of the first chuck and the position of the stop (6) of the second chuck the second and third chuck can be released and clamped a number of times between individual steps in the processing in order to enable the crankshaft (1) warped by the forces and temperatures occuring in the processing to be automatically straightened.

**Revendications**

1. Plateau de serrage pour serrer des vilebrequins (1) ou des pièces à usiner similaires sur des machines à usiner les vilebrequins, dans lesquelles les pièces à usiner sont logées librement tournantes entre des pointes, formant un premier dispositif de serrage, et, de plus, serrées à l'aide d'un deuxième dispositif de serrage actionné hydrauliquement, caractérisé en ce que

— le deuxième dispositif de serrage presse, à l'aide d'un ou de plusieurs vérins (5) actionnés hydrauliquement, un ou plusieurs manetons (3) du vilebrequin (1) avec une force plus grande et contre une butée (6), de façon que la position en rotation du vilebrequin (1) soit fixée, et

— un troisième dispositif de serrage presse un ou plusieurs vérins (7, 8, 9), orientés en partie les uns contre les autres, contre un ou plusieurs flasques du vilebrequin (1)

— les deuxièmes et troisièmes dispositifs de serrage, tournant conjointement lors du fonctionnement de la machine-outil et actionnés hydrauliquement, sont privés, pendant la rotation, de liaison à la pompe hydraulique qui ne tourne pas conjointement avec la pièce à usiner, et la pression nécessaire au maintien du serrage est fournie par des accumulateurs de milieu sous pression (19, 20) sollicités élastiquement et logés dans le plateau de serrage en rotation.

2. Dispositif de serrage selon la revendication 1, caractérisé en ce qu'à chaque nouveau serrage du deuxième et du troisième dispositif de serrage, les accumulateurs de milieu sous pression (19, 20) sont automatiquement replacés de nouveau sous pression.

3. Dispositif de serrage selon la revendication 1, caractérisé en ce qu'à l'arrêt et également en rotation, l'état de serrage, obtenu mécaniquement, du deuxième et du troisième dispositif de serrage peut être sondé par l'intermédiaire de capteurs (41, 42, 43, 27, 28), depuis l'extérieur du dispositif de serrage.

4. Dispositif de serrage selon la revendication 1, caractérisé en ce que les efforts de pressage du deuxième dispositif de serrage sont choisis, par rapport à ceux du troisième dispositif de serrage, en valeur et en direction, de façon qu'aucune modification de position ni gauchissement de la position du vilebrequin telle que fixée par le serrage du deuxième dispositif de serrage ne soit possible par serrage du troisième dispositif de serrage.

5. Dispositif de serrage selon la revendication 1, caractérisé en ce que, pour maintenir le serrage du premier dispositif de serrage et pour conserver la position de la butée (6) du deuxième dispositif de serrage, il est possible de déserrer et de serrer à plusieurs reprises les deuxième et troisième dispositifs de serrage entre les passes d'usinage individuelles, afin de permettre un alignement automatique du vilebrequin (1) déformé lors de l'usinage par les efforts et température d'usinage se produisant.

feststehend

drehend

51 50

Fig. 1

EP 0 208 191 B1

Fig. 2

2

Fig. 3

27, 2̸
41 - 43

EP 0 208 191 B1

Fig. 4

4